(19) Europäisches Patentamt
European Patent Office
Office européen des brevets

(11) Veröffentlichungsnummer : **0 385 293 B1**

# (12) EUROPÄISCHE PATENTSCHRIFT

(45) Veröffentlichungstag der Patentschrift :
**28.04.93 Patentblatt 93/17**

(51) Int. Cl.5 : **C09D 5/44,** C08G 18/66, C08G 18/80

(21) Anmeldenummer : **90103538.6**

(22) Anmeldetag : **23.02.90**

## (54) Hitzehärtbares Überzugsmittel für die kathodische Elektrotauchlackierung.

(30) Priorität : **28.02.89 DE 3906143**

(43) Veröffentlichungstag der Anmeldung :
**05.09.90 Patentblatt 90/36**

(45) Bekanntmachung des Hinweises auf die Patenterteilung :
**28.04.93 Patentblatt 93/17**

(84) Benannte Vertragsstaaten :
**AT BE CH DE ES FR GB IT LI NL SE**

(56) Entgegenhaltungen :
**DE-A- 3 311 516**
**FR-A- 2 352 845**

(73) Patentinhaber : **BASF Lacke + Farben AG**
**Glasuritstrasse 1**
**W-4400 Münster (DE)**

(72) Erfinder : **Schwerzel, Thomas, Dr.**
**Auf der Hoehe 42**
**W-6701 Meckenheim (DE)**
Erfinder : **Schupp, Hans, Dr.**
**Jean-Voelker-Strasse 40**
**W-6520 Worms 1 (DE)**
Erfinder : **Huemke, Klaus, Dr.**
**Gartenstrasse 24**
**W-6700 Ludwigshafen (DE)**
Erfinder : **Faul, Dieter, Dr.**
**Goethestrasse 4**
**W-6702 Bad Duerkheim (DE)**
Erfinder : **Heimann, Ulrich, Dr.**
**Schlagholz 28**
**W-4400 Muenster (DE)**

(74) Vertreter : **Springer, Hans Jörg, Dr. et al**
**BASF Aktiengesellschaft Patentabteilung**
**Carl-Bosch-Strasse 38**
**W-6700 Ludwigshafen (DE)**

EP 0 385 293 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein hitzhärtbares Überzugsmittel für die kathodische Elektrotauchlackierung, das durch Protonieren mit Säure wasserverdünnbar ist, enthaltend ein Gemisch eines Polymerisations-, Polykondensations- oder Polyadditionsproduktes mit einem Vernetzungsmittel, erhältlich im wesentlichen durch Umsetzung eines Gemisches aus einer aliphatischen und einer aromatischen Polyhydroxyverbindung mit einem aliphatischen und/oder cycloaliphatischen Polyisocyanat.

Elektrotauchlackiersysteme mit Vernetzern auf Basis von verkappten Polyisocyanaten sind bekannt und werden beispielsweise in der US-PS 4,296,010 beschrieben. Nachteilig bei den darin beschriebenen aromatischen Polyisocyanatverbindungen ist, daß nach dem Einbrennen der Lacke eine Vergilbung auftritt. Dies führt vor allem bei hellen Decklackierungen zu unansehnlichen Flecken im Außenbereich. Der große Vorteil dieser Vernetzer auf Basis aromatischer Isocyanate ist jedoch, daß sie dem jeweiligen Lacksystem gute Korrosionsschutzeigenschaften verleihen. Die Einbrenntemperaturen liegen für alkoholverkappte aromatische Isocyanatsysteme des Standes der Technik zwischen 165 und 185°C. Aromatische Vernetzer, die aus Diphenylmethandiisocyanat als Isocyanatkomponente aufgebaut werden, sind zwar gemäß der EP-A-236 050 als nicht vergilbend beschrieben, benötigen jedoch wegen der Vernetzung durch Spaltung eines Urethans zum Isocyanat eine Einbrenntemperatur von 170°C.

Vernetzer, die aus aliphatischen Polyisocyanaten und Aminen als Verkappungsmittel hergestellt werden, wie beispielsweise nach der DE-OS 33 11 516, zeigen keine Neigung zum Vergilben der Lacke nach dem Einbrennen. Weiterhin bieten sie den Vorteil, daß sie schon zwischen 140°C und 160°C durch Isocyanatbildung aus einem Harnstoff vernetzt werden können. Allerdings zeigt sich, daß das Korrosionsschutzvermögen von Lacken mit dieser Art Vernetzer schlechter ist, als bei der Verwendung von aromatischen Isocyanatvernetzern.

Aufgabe der vorliegenden Erfindung war es, Vernetzer für ein Überzugsmittel für die kathodische Elektrotauchlackierung zu entwickeln, das sich bei einer niedrigen Einbrenntemperatur verarbeiten läßt und Überzüge ergibt, die vergilbungsfrei sind. Gegenstand der vorliegenden Erfindung ist ein hitzehärtbares Überzugsmittel für die kathodische Elektrotauchlackierung, das durch Protonieren mit Säure wasserverdünnbar ist, enthaltend

(A) 50 bis 95 Gew.% eines Polymerisations-, Polykondensations- oder Polyadditionsproduktes mit einem mittleren Molekulargewicht von 500 bis 20 000 mit primären und/oder sekundären Hydroxylgruppen und primären, sekundären und/oder tertiären Aminogruppen und

(B) 5 bis 50 Gew.% eines Vernetzungsmittels, erhältlich durch Umsetzung
  a) einer aliphatischen Polyhydroxyverbindung und
  b) einer aromatischen Polyhydroxyverbindung mit
  c) einem aliphatischen und/oder cycloaliphatischen Polyisocyanat und
  d) einem Blockierungsmittel.

Zu den Aufbaukomponenten ist folgendes auszuführen:

Geeignete Aufbaukomponenten (A) sind bekannt und beispielsweise in den europäischen Patentanmeldungen EP-A 227 942, EP-A 224 221, EP-A 272 427 und EP-A 225 530 beschrieben.

Die Komponente (A) wird in einer Menge von 50 bis 95 Gew.%, bevorzugt 60 bis 80 Gew.%, verwendet.

Geeignete Aufbaukomponenten a) zur Herstellung der Komponente (B) sind aliphatische Polyhydroxyverbindungen mit Molekulargewichten $\overline{M}_n$ von 62 bis 8 000.

Verbindungen dieses Typs sind beispielsweise Di- und Polyole sowie Polyether- und Polyesterpolyole, die ggf. noch weitere funktionelle Gruppen aufweisen können.

Geeignete Di- und Polyole sind z.B. Ethylenglykol, Trimethylolmethan, Pentaerythrit, Trimethylolethan, Trimethylolpropan, Glycerin oder sonstigen Polyhydroxyverbindungen von Alkanen oder Cycloalkanen oder N-Alkyl-diethanolamine wie N-Methyl-diethanolamin. Es können auch Mischungen dieser Di- und Polyole verwendet werden.

Geeignete Polyetherole können durch Umsetzung hergestellt werden, von einem oder mehreren Alkylenoxiden mit 2 bis 4 Kohlenstoffatomen im Alkylenrest mit einem Startermolekül, das zwei aktive Wasserstoffatome gebunden enthält. Als Alkylenoxide seien z.B. genannt Ethylenoxid, 1,2-Propylenoxid, Epichlorhydrin und 1,2- und 2,3-Butylenoxid. Vorzugsweise Anwendung finden Ethylenoxid und Mischungen aus 1,2-Propylenoxid und Ethylenoxid. Die Alkylenoxide können einzeln, alternierend nacheinander oder als Mischungen verwendet werden. Als Startermoleküle kommen beispielsweise in Betracht: Polyole wie z.B. Trimethylolmethan, Pentaerythrit, Trimethylolethan, Trimethylolpropan, Glycerin oder sonstige Polyhydroxyverbindungen von Alkanen oder Cycloalkanen aber auch Wasser, Aminoalkohole, wie N-Alkyl-diethanol-amine, beispielsweise N-Methyl-diethanolamin und Diole, wie Ethylenglykol, 1,3-Propylenglykol, Butandiol-1,4 und Hexandiol-1,6. Gegebenenfalls können auch Mischungen von Startermolekülen eingesetzt werden. Enthalten die Startermoleküle basische Gruppen, die zur Salzbildung befähigt sind, ist es auch möglich, die Komponenten (B) getrennt zu dispergieren und zu einer Dispersion der Komponente (A) zuzusetzen. Auch ist es möglich, eine für sich dispergierbare Komponente (B) dadurch herzustellen, daß man basische zur Salzbildung befähigte Gruppen über die Komponente b), c) oder d) einführt.

Geeignete Polyetherole sind ferner die hydroxylgruppenhaltigen Polymerisationsprodukte des Tetrahydrofurans.

Die Polyetherole besitzen Molekulargewichte von 100 bis 8 000, vorzugsweise 200 bis 2 000. Sie können sowohl einzeln als auch in Form von Mischungen untereinander zur Anwendung kommen.

Geeignete Polyesterpolyole können beispielsweise aus Dicarbonsäuren mit 2 bis 12 Kohlenstoffatomen und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyesterpolyole kann es gegebenenfalls vorteilhaft sein, anstelle der Carbonsäuren die entsprechenden Carbonsäurederivate, wie Carbonsäureester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, Butandiol-1,4, Pentandiol-1,5, Hexandiol-1,6, Decandiol-1,10, 2,2-Dimethyl-propandiol-1,3, Propandiol-1,3 und Dipropylenglykol. Je nach den gewünschten Eigenschaften können die mehrwertigen Alkohole allein oder gegebenenfalls in Mischungen untereinander verwendet werden.

Geeignet sind ferner Ester der Kohlensäure mit den genannten Diolen, insbesondere solchen mit 4 bis 6 Kohlenstoffatomen, wie Butandiol-1,4 und/oder Hexandiol-1,6, Kondensationsprodukte von ω-Hydroxycarbonsäuren, beispielsweise ω-Hydroxycapronsäure und vorzugsweise Polymerisationsprodukte von Lactonen, beispielsweise gegebenenfalls substituierten ε-Caprolactonen.

Als Polyesterole vorzugsweise verwendet werden Ethandiol-polyadipate, 1,4-Butandiolpolyadipate, Ethandiol-1,4-butandiol-polyadipate, 1,6-Hexandiol-neopentylglykol-polyadipate, 1,6-Hexandiol-1,4-butandiol-polyadipate und Polycaprolactone.

Die Polyesterole besitzen Molekulargewichte von 500 bis 8 000, vorzugsweise von 400 bis 3 000.

Als aromatische Polyhydroxyverbindungen b) sind beispielsweise Phenole mit mindestens zwei phenolischen Hydroxylgruppen geeignet wie 2-Hydroxy-biphenyl, 4-Hydroxy-biphenyl, Bisphenole der allgemeinen Formel

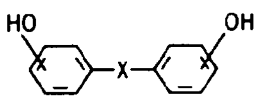

(II)

wobei die Hydroxylgruppen in ortho- oder para-Stellung zu X stehen und X ein geradkettiger oder verzweigter, zweiwertiger aliphatischer Rest mit 1 bis 3 Kohlenstoffatomen oder $SO_2$, CO, O oder $CH_2$-$NRCH_2$- (mit R gleich Alkylrest mit 1 bis 16 C-Atomen) ist.

Beispiele für geeignete Bisphenole sind 2,2-Bis-(4-hydroxyphenyl)-propan (Bisphenol A), 4,4'-Dihydroxybenzophenon, 4,4'-Dihydroxyphenylsulfon, 1,1-Bis(4-hydroxyphenyl)-ethan, 1,1-Bis-(4-hydroxyphenyl)-isobutan, 2,2-Bis-(4-hydroxy-tert.-butylphenyl)-propan, Bis-(4-hydroxynaphthyl)-methan und 1,5-Dihydroxynapthalin.

Bevorzugt werden Bisphenol A, 4,4'-Dihydroxybenzophenon und 4,4'-Dihydroxyphenylsulfon verwendet.

Geeignete aliphatische und/oder cycloaliphatische Polyisocyanate c) sind beispielsweise Hexamethylendiisocyanat, Hexan-1,5-diisocyanat, Isophoron-diisocyanat, 1,4-Cyclohexan-diisocyanat, 1-Methyl-2,4- und 2,6-Cyclohexan-diisocyanat sowie die entsprechenden isomeren Gemische, 4,4-, 2,4- und 2,2-Dicyclohexylmethan-diisocyanat sowie die entsprechenden isomeren Gemische. Bevorzugt werden die Isocyanate mit unterschiedlich reaktiven Isocyanatgruppen wie Isophoron-diisocyanat, Hexan-1,5-diisocyanat und 1-Methyl-2,4-cyclohexan-diisocynat verwendet.

Geeignete Blockierungsmittel d) sind vor allem sekundäre aliphatische und cycloaliphatische Monoamine wie Dimethylamin, Diethylamin, Dipropylamin, Dibutylamin, Dipentylamin, Dihexylamin und deren Isomere, wie Diisopropylamin oder auch asymetrische wie N-Ethyl-1-propanamin, N,N-Dimethylaminopropylamin, N,N-Dimethylaminoethylamin sowie tertiäre Aminogruppen tragende primäre und/oder sekundäre Amine. Beispiele geeigneter cycloaliphatischer Amine sind Dicyclohexylamin, Dicyclopentylamin. Weiterhin kommen Morpholin oder N-Alkylpiperazine in Frage.

Die Umsetzung erfolgt bei den für Isocyanatreaktionen üblichen Bedingungen mit Reaktionstemperaturen von Raumtemperatur bis etwa 150°C. Sind die Einsatzstoffe und das Reaktionsprodukt bei Reaktionstemperatur flüssig, so kann ohne Lösungsmittel gearbeitet werden, im allgemeinen wird man die Reaktion jedoch in

einem gegenüber Isocyanat-, Alkohol- und Aminogruppen inerten Lösungsmittel wie einem Ether, Ester, Keton oder Kohlenwasserstoff durchführen. Die Reihenfolge der Zugabe der Komponenten ist prinzipiell beliebig, bevorzugt werden aber die Komponenten a), b) und c) zuerst miteinander umgesetzt und dann erfolgt die Zugabe der Komponente d).

Die Mengen der Komponenten a), b), c) und d) werden so gewählt, daß die Summe der Äquivalente von a), b) und d) mindestens gleich den Äquivalenten an c) ist. Ist die Summe größer, so entstehen Produkte, die noch freie Hydroxyl- oder Amingruppen enthalten. Bevorzugt ist aber, daß die Summe der Äquivalente von a), b) und d) etwa gleich den Äquivalenten von c) ist. Die Addition der Alkohole an Isocyanate erfolgt vorteilhafterweise in Gegenwart eines Katalysators wie Dibutylzinndilaurat.

Die Komponente (B) wird in einer Menge von 5 bis 50 Gew.%, bevorzugt 20 bis 40 Gew.%, verwendet.

Zur Herstellung einer wäßrigen Dispersion werden die Komponenten (A) und (B) gemischt und mit einer Säure, z.B. Ameisensäure, Essigsäure oder Milchsäure versetzt und anschließend auf Verarbeitungskonzentration verdünnt. Man kann jedoch auch die Komponenten (A) und (B) langsam unter Rühren in angesäuertes Wasser einfließen lassen. Zur Herstellung von Elektrotauchbädern können dem Komponentengemisch aus (A) und (B) noch andere Bindemittel und Pigmente in Form einer dem Fachmann bekannten Pigmentpaste sowie weitere bei der Elektrotauchlackierung übliche Hilfs- und Zusatzstoffe wie Füllstoffe, Korrosionsinhibitoren, Dispergierhilfsmittel, Entschäumer, Lösemittel oder auch weitere Harzkomponenten zugesetzt werden. Die Elektrotauchlackbäder besitzen üblicherweise einen Feststoffgehalt von 5 bis 30 Gew.%. Die Abscheidung erfolgt üblicherweise bei Temperaturen von 15 bis 40°C, während einer Zeit von 1 bis 5 Minuten bei einer angelegten Spannung von 50 bis 500 Volt. Der zu beschichtende elektrisch leitende Körper, beispielsweis ein Kupfer, Aluminium oder Stahlblech, das gegebenenfalls chemisch vorbehandelt z.B. phosphatiert sein kann, wird dabei als Kathode geschaltet. Der abgeschiedene Film kann bei Temperaturen von 120 bis 200, vorzugsweise 130 bis 180°C, innerhalb von 5 bis 45, vorzugsweise 10 bis 30 Minuten, gehärtet werden.

## Beispiele

### Herstellung der Komponente (A)

Ein Gemisch aus 5800 g Hexamethylendiamin, 7250 g Dimerfettsäure und 1400 g Leinölfettsäure wurde langsam auf 195°C erhitzt, wobei das entstehende Wasser (540 g) abdestilliert wurde. Anschließend wurde das Gemisch auf 100°C abgekühlt und mit 5961 g Toluol auf einen Festgehalt von 70 Gew.% verdünnt. Das Produkt hatte eine Aminzahl von 197 (g KOH/100 g).

In einem zweiten Rührgefäß wurden 10 Äquivalente eines Diglycidylethers auf Basis von Bisphenol A und Epichlorhydrin mit einem Äquivalentgewicht von 485 (Epikote® der Firma Shell) in einem Lösungsmittelgemisch aus 1039 g Toluol und 1039 g Isobutanol unter Erwärmen gelöst. Die so entstandene Lösung wurde auf 60°C gekühlt und mit 300,4 g Methylethanolamin und 128 g Isobutanol versetzt, wobei die Temperatur innerhalb von 5 min auf 78°C anstieg. Danach wurden 1850 g des nach der ersten Stufe erhaltenen Kondensationsproduktes zugegeben und die Mischung 2 Stunden auf 80°C erwärmt.

### Vernetzer 1:

444,44 g Isophorondiisocyanat wurden in 111,1 g Toluol gelöst mit 0,44 g Dibutylzinndilaurat versetzt und auf 60°C erwärmt. Binnen einer Stunde ließ man eine Mischung aus 91,2 g Bisphenol A, 106,4 g eines Reaktionsproduktes aus Trimethylolpropan mit drei Mol Ethylenoxid (Polyol TP 30; Fa. Perstorp), 65,9 g Toluol und 65,9 g Methylisobutylketon zutropfen. Man ließ zwei Stunden nachreagieren bis der NCO-Wert 9,5 % betrug. Dann tropfte man 258 g Dibutylamin so zu, daß die Temperatur nicht über 80°C stieg. Man verdünnte auf einen Feststoffgehalt von 70 Gew.% und ließ noch eine Stunde nachreagieren.

### Vernetzer 2:

444,44 g Isophorondiisocyanat wurden in 111,1 g Toluol gelöst, mit 0,44 g Dibutylzinndilaurat versetzt und auf 60°C erwärmt. Binnen einer Stunde ließ man eine Mischung aus 136,8 g Bisphenol A, 70,8 g eines Reaktionsproduktes aus Trimethylolpropan mit drei Mol Ethylenoxid (Polyol TP 30; Fa. Perstorp), 69,3 g Toluol und 69,3 g Methylisobutylketon zutropfen. Man ließ zwei Stunden nachreagieren bis der NCO-Wert 9,3 % betrug. Dann tropfte man 258 g Dibutylamin so zu, daß die Temperatur nicht über 80°C stieg. Man verdünnte auf einen Feststoffgehalt von 70 Gew.% und ließ noch eine Stunde nachreagieren.

Vernetzer 3 (Vergleichsbeispiel zu 1 und 2):

666,8 g Isophorondiisocyanat wurden in 566,1 g Toluol gelöst mit 0,44 g Dibutylzinndilaurat versetzt und auf 60°C erwärmt. Binnen zwei Stunden ließ man eine Mischung aus 266,0 g eines Reaktionsproduktes aus Trimethylolpropan mit drei Mol Ethylenoxid (Polyol TP 30; Fa. Perstorp) zutropfen. Man ließ zwei Stunden nachreagieren bis der NCO-Wert 8,0 % betrug. Dann tropfte man 387.7 g Dibutylamin so zu, daß die Temperatur nicht über 80°C stieg. Man verdünnte auf einen Feststoffgehalt von 70 Gew.% und ließ noch eine Stunde nachreagieren.

Vernetzer 4:

444,44 g Isophorondiisocyanat wurden in 111,1 g Toluol gelöst mit 0,44 g Dibutylzinndilaurat versetzt und auf 60°C erwärmt. Binnen einer Stunde ließ man eine Mischung aus 91,2 g Bisphenol A, 53,6 g Trimethylolpropan, 48,3 g Toluol und 48,3 g Methylisobutylketon zutropfen. Man ließ zwei Stunden nachreagieren bis der NCO-Wert 10,5 % betrug. Dann tropfte man 258 g Dibutylamin so zu, daß die Temperatur nicht über 80°C stieg. Man verdünnte auf einen Feststoffgehalt von 70 Gew.% und ließ noch eine Stunde nachreagieren.

Vernetzer 5 (Vergleichsbeispiel zu 4):

666,8 g Isophorondiisocyanat wurden in 509,5 g Toluol gelöst mit 0,44 g Dibutylzinndilaurat versetzt und auf 60°C erwärmt. Binnen zwei Stunden ließ man eine Mischung aus 134,2 g Trimethylolpropan zutropfen. Man ließ zwei Stunden nachreagieren. Dann tropfte man 387,7 g Dibutylamin so zu, daß die Temperatur nicht über 80°C stieg. Man verdünnte auf einen Feststoffgehalt von 70 Gew.% und ließ noch eine Stunde nachreagieren.

Vernetzer 6 (Vergleichsbeispiel zu 1 bis 5)

500 g einer 75 gew.%igen Lösung eines Umsetzungsproduktes aus einem Mol Trimethylolpropan mit drei Mol Toluylendiisocyanat in Essigester wurden mit 115,3 g Toluol und 0,5 g Dibutylzinndilaurat gemischt und auf 60°C erwärmt. Man tropfte dann 185 g Butylglykol hinzu und ließ nach Beendigung des Zulaufs noch eine Stunde bei 80°C reagieren.

Pigmentpaste

Zu 525,8 g eines Bindemittels wie es in der EP 167 029 als Komponente A1 beschrieben ist, wurden 168,7 g Butylglykol, 600 g Wasser und 17,7 g Essigsäure gegeben. Dann setzte man 800 g Titandioxid, 11,0 g Ruß und 50 g basisches Bleisilikat hinzu und mahlte auf einer Kugelmühle bis zu einer Korngröße kleiner 9 µm. Man stellte den Feststoffgehalt mit Wasser auf 48 Gew.% ein.

Elektrotauchbäder

685 g Bindemittel wurden mit 293 g Vernetzer und der in der Tabelle angegebenen Menge Essigsäure gemischt und mit soviel Wasser versetzt, daß ein Feststoffgehalt von 31 Gew.% erhalten wurde. Unter Vakuum wurden anschließend die organischen Lösemittel azeotrop abdestilliert. Man stellte mit Wasser einen Feststoffgehalt von 35 Gew.% ein. Die so erhaltene Dispersion wurde mit 775 g Pigmentpaste gemischt und mit Wasser auf 5000 ml verdünnt. Die Bäder wurden 168 Stunden bei 30°C gerührt. Bei 27°C wurden innerhalb von 120 Sekunden an kathodisch geschalteten Stahlblechen abgeschieden und bei der angegebenen Temperatur 20 Minuten eingebrannt.

| Beispiele | Vern. | Essigs. | U/V | EBT | SD | 480h SSt | Vergilbung |
|---|---|---|---|---|---|---|---|
| 1 | 1 | 15.6 | 240 | 155 | 24 | 1,0 | i. O. |
| 2 | 2 | 15.6 | 230 | 155 | 25 | 1,5 | i. O. |
| 3 | 3 | 14.7 | 240 | 155 | 25 | 2,3 | i. O. |
| 4 | 4 | 15.4 | 250 | 155 | 24 | 1,3 | i. O. |
| 5 | 5 | 13.8 | 250 | 155 | 22 | 2,5 | i. O. |
| 6 | 6 | 15.2 | 250 | 155 | 23 | 1,6 | nicht i. O. |

Dispersion für Bad aus Vernetzer 6 wurde unter Zugabe von 13,7 g Dibutylzinndilaurat in die organische Phase vor dem Dispergieren hergestellt.

| | |
|---|---|
| Essigs. | Essigsäure |
| U/V | Abscheidespannung in V |
| EBT | Einbrenntemperatur |
| SD | Schichtdicke in µm |
| 480h SST | 480 Stunden Salzsprühtest nach DIN 50021 |
| Vergilbung | i. O. = keine Vergilbung |
| | n. i. O. = Vergilbung |

## Patentansprüche

### Patentansprüche für folgende Vertragsstaaten : AT, BE, CH, DE, FR, GB, IT, LI, NL, SE

**1.** Hitzehärtbares Überzugsmittel für die kathodische Elektrotauchlackierung, das durch Protonieren mit Säure wasserverdünnbar ist, enthaltend
(A) 50 bis 95 Gew.% eines Polymerisations-, Polykondensations- oder Polyadditionsproduktes mit einem mittleren Molekulargewicht $\overline{M}_n$ von 500 bis 20 000 mit primären und/oder sekundären Hydroxylgruppen und primären, sekundären und/oder tertiären Aminogruppen und
(B) 5 bis 50 Gew.% eines Vernetzungsmittels, erhältlich durch Umsetzung
a) einer aliphatischen Polyhydroxyverbindung und
b) einer aromatischen Polyhydroxyverbindung mit
c) einem aliphatischen und/oder cycloaliphatischen Polyisocyanat und
d) einem Blockierungsmittel.

**2.** Überzugsmittel nach Anspruch 1, enthaltend ein Polyetherpolyol als Komponente a).

**3.** Überzugsmittel nach einem der Ansprüche 1 oder 2, enthaltend zwei phenolische Hydroxylgruppen enthaltende Phenole als Komponente b).

**4.** Überzugsmittel nach einem der Ansprüche 1 bis 3, enthaltend ein Diisocyanat mit unterschiedlich reaktiven Isocyanatgruppen.

**5.** Überzugsmittel nach einem der Ansprüche 1 bis 4, enthaltend Isophorondiisocyanat als Komponente c).

**6.** Überzugsmittel nach einem der Ansprüche 1 bis 5, enthaltend ein Dialkylamin als Komponente d).

**7.** Verwendung des Überzugsmittels nach einem der Ansprüche 1 bis 6 in Form einer wäßrigen Dispersion, die gegebenenfalls zusätzlich Pigmente, Füllstoffe, Korrosionsinhibitoren, übliche Lackhilfsmittel und/oder Lösemittel enthält, für die kathodische Elektrotauchlackierung elektrisch leitfähiger Substrate.

**8.** Beschichteter Gegenstand, erhältlich unter Verwendung eines Überzugsmittels gemäß einem der Ansprüche 1 bis 6.

**Patentansprüche für folgenden Vertragsstaat : ES**

1. Verfahren zur Herstellung eines hitzehärtbaren Überzugsmittels für die kathodische Elektrotauchlackierung, das durch Protonieren mit Säure wasserverdünnbar ist, dadurch gekennzeichnet, daß man
(A) 50 bis 95 Gew.% eines Polymerisations-, Polykondensations- oder Polyadditionsproduktes mit einem mittleren Molekulargewicht $\overline{M}_n$ von 500 bis 20 000 mit primären und/oder sekundären Hydroxylgruppen und primären, sekundären und/oder tertiären Aminogruppen mit
(B) 5 bis 50 Gew.% eines Vernetzungsmittels, erhältlich durch Umsetzung
a) einer aliphatischen Polyhydroxyverbindung und
b) einer aromatischen Polyhydroxyverbindung mit
c) einem aliphatischen und/oder cycloaliphatischen Polyisocyanat und
d) einem Blockierungsmittel,
mischt.

2. Verfahren zur Herstellung eines Überzugsmittels nach Anspruch 1, dadurch gekennzeichnet, daß man ein Polyetherpolyol als Komponente a) verwendet.

3. Verfahren zur Herstellung eines Überzugsmittels nach einem der Ansprüche 1 oder 2, dadurch gekennzeichnet, daß man zwei phenolische Hydroxylgruppen enthaltende Phenole als Komponente b) verwendet.

4. Verfahren zur Herstellung eines Überzugsmittels nach einem der Ansprüche 1 bis 3, dadurch gekennzeichnet, daß man ein Diisocyanat mit unterschiedlich reaktiven Isocyanatgruppen verwendet.

5. Verfahren zur Herstellung eines Überzugsmittels nach einem der Ansprüche 1 bis 4, dadurch gekennzeichnet, daß man Isophorondiisocyanat als Komponente c) verwendet.

6. Verfahren zur Herstellung eines Überzugsmittels nach einem der Ansprüche 1 bis 5, dadurch gekennzeichnet, daß man ein Dialkylamin als Komponente d) verwendet.

7. Verfahren zur Herstellung eines Überzugs durch kathodische Tauchlackierung elektrisch leitfähiger Substrate, dadurch gekennzeichnet, daß man ein Überzugsmittel gemäß einem der Ansprüche 1 bis 6 in Form einer wäßrigen Dispersion verwendet.

**Claims**

**Claims for the following Contracting States : AT, BE, CH, DE, FR, GB, IT, LI, NL, SE**

1. A heat-curable coating composition for cathodic electrocoating which becomes water-thinnable on protonation with an acid, comprising
(A) 50-95% by weight of a chain or step growth polymerization product having an average molecular weight $\overline{M}_n$ of from 500 to 20,000 and containing primary and/or secondary hydroxyl groups and primary, secondary and/or tertiary amino groups, and
(B) 5-50% by weight of a crosslinking agent obtainable by reacting
a) an aliphatic polyhydroxy compound and
b) an aromatic polyhydroxy compound with
c) an aliphatic and/or cycloaliphatic polyisocyanate and
d) a blocking agent.

2. A coating composition as claimed in claim 1, containing a polyetherpolyol as component a).

3. A coating composition as claimed in claim 1 or 2, containing as component b) a phenol which contains two phenolic hydroxyl groups.

4. A coating composition as claimed in any of claims 1 to 3, containing a diisocyanate having isocyanate groups of different reactivities.

5. A coating composition as claimed in any of claims 1 to 4, containing isophorone diisocyanate as component c).

6. A coating composition as claimed in any of claims 1 to 5, containing a dialkylamine as component d).

7. The use of a coating composition as claimed in any of claims 1 to 6 in the form of an aqueous dispersion which may additionally contain pigments, fillers, corrosion inhibitors, conventional coating aids and/or solvents for the cathodic electrocoating of an electrically conductive substrate.

8. A coated article obtainable using a coating composition as claimed in any of claims 1 to 6.

**Claims for the following Contracting State : ES**

1. A process for preparing a heat-curable coating composition for cathodic electrocoating which becomes water-thinnable on protonation with an acid, which comprises mixing
   (A) 50-95% by weight of a chain or step growth polymerization product having an average molecular weight $\overline{M}_n$ of from 500 to 20,000 and containing primary and/or secondary hydroxyl groups and primary, secondary and/or tertiary amino groups, with
   (B) 5-50% by weight of a crosslinking agent obtainable by reacting
      a) an aliphatic polyhydroxy compound and
      b) an aromatic polyhydroxy compound with
      c) an aliphatic and/or cycloaliphatic polyisocyanate and
      d) a blocking agent.

2. A process for preparing a coating composition as claimed in claim 1, wherein a polyetherpolyol is used as component a).

3. A process for preparing a coating composition as claimed in claim 1 or 2, wherein a phenol which contains two phenolic hydroxyl groups is used as component b).

4. A process for preparing a coating composition as claimed in any of claims 1 to 3, wherein a diisocyanate having isocyanate groups of different reactivities is used.

5. A process for preparing a coating composition as claimed in any of claims 1 to 4, wherein isophorone diisocyanate is used as component c).

6. A process for preparing a coating composition as claimed in any of claims 1 to 5, wherein a dialkylamine is used as component d).

7. A process for preparing a coating by the cathodic electrocoating of an electrically conductive substrate, which comprises using a coating composition as claimed in any of claims 1 to 6 in the form of an aqueous dispersion.

**Revendications**

**Revendications pour les Etats contractants suivants : AT, BE, CH, DE, FR, GB, IT, LI, NL, SE**

1. Agent ou composition de revêtement durcissable à chaud destiné au laquage par trempage électrophorétique ou électrodéposition cathodique, qui est diluable à l'eau par protonation avec un acide, contenant
   (A) 50 à 95% en poids d'un produit de polymérisation, de polycondensation ou de polyaddition, d'un poids moléculaire moyen $\overline{M}_n$ de 500 à 20.000, avec des radicaux hydroxyle primaires et/ou secondaires et des radicaux amino primaires, secondaires et/ou tertiaires et
   (B) 5 à 50% en poids d'un agent de réticulation, que l'on peut obtenir par la réaction
      (a) d'un composé polyhydroxylé aliphatique et
      (b) d'un composé polyhydroxylé aromatique, avec
      (c) un polyisocyanate aliphatique et/ou cycloaliphatique et
      (d) un agent de blocage.

2. Agent ou composition de revêtement selon la revendication 1, contenant un polyétherpolyol à titre de

composant a).

3. Agent ou composition de revêtement selon la revendication 1 ou la revendication 2, contenant des phénols contenant deux radicaux hydroxyle phénoliques à titre de composant b).

4. Agent ou composition de revêtement selon l'une quelconque des revendications 1 à 3, contenant un diisocyanate avec des radicaux isocyanate de réactivité différente.

5. Agent ou composition de revêtement selon l'une quelconque des revendications 1 à 4, contenant du diisocyanate d'isophorone à titre de composant c).

6. Agent ou composition de revêtement selon l'une quelconque des revendications 1 à 5, contenant une dialkylamine à titre de composant c).

7. Utilisation de l'agent ou de la composition de revêtement selon l'une quelconque des revendications 1 à 6, sous forme d'une dispersion aqueuse, qui contient éventuellement complémentairement des pigments, des charges, des inhibiteurs de corrosion, des solvants et/ou des adjuvants de laquage ou de peinture usuels, en vue du laquage par trempage électrophorétique cathodique ou électrodéposition cathodique de subjectiles conducteurs de l'électricité.

8. Objets revêtus, que l'on peut obtenir par l'utilisation d'un agent ou d'une composition de revêtement selon l'une quelconque des revendications 1 à 6.

**Revendications pour l'Etat contractant suivant : ES**

1. Procédé pour la préparation d'un agent ou d'une composition de revêtement durcissable à la chaleur pour le laquage par trempage électrophorétique cathodique ou électrodéposition cathodique, qui est diluable à l'eau par protonation avec un acide, caractérisé en ce que l'on mélange
   (A) 50 à 95% en poids d'un produit de polymérisation, de polycondensation ou de polyaddition, d'un poids moléculaire moyen $\overline{M}_n$ de 500 à 20.000, avec des radicaux hydroxyle primaires et/ou secondaires et des radicaux amino primaires, secondaires et/ou tertiaires et
   (B) 5 à 50% en poids d'un agent de réticulation, que l'on peut obtenir par la réaction
      (a) d'un composé polyhydroxylé aliphatique et
      (b) d'un composé polyhydroxylé aromatique, avec
      (c) un polyisocyanate aliphatique et/ou cycloaliphatique et
      (d) un agent de blocage.

2. Procédé de préparation d'un agent ou d'une composition de revêtement selon la revendication 1, caractérisé en ce que l'on utilise un polyéthérol à titre de composant a).

3. Procédé de préparation d'un agent ou d'une composition de revêtement selon la revendication 1 ou la revendication 2, caractérisé en ce que l'on utilise des phénols contenant deux radicaux hydroxyle phénoliques à titre de composant b).

4. Procédé de préparation d'un agent ou d'une composition de revêtement selon l'une quelconque des revendications 1 à 3, caractérisé en ce que l'on utilise un diisocyanate avec des radicaux isocyanate de réactivité différente.

5. Procédé de préparation d'un agent ou d'une composition de revêtement selon l'une quelconque des revendications 1 à 4, caractérisé en ce que l'on utilise le diisocyanate d'isophorone à titre de composant c).

6. Procédé de préparation d'un agent ou d'une composition de revêtement selon l'une quelconque des revendications 1 à 5, caractérisé en ce que l'on utilise une dialkylamine à titre de composant d).

7. Procédé d'obtention d'un revêtement par laquage par trempage électrophorétique cathodique ou électrodéposition cathodique de subjectiles conducteurs de l'électricité, caractérisé en ce que l'on utilise un agent ou une composition de revêtement selon l'une quelconque des revendications 1 à 6, sous forme d'une dispersion aqueuse.